# EUROPÄISCHE PATENTANMELDUNG

(11) **EP 3 121 104 A1**
(43) Veröffentlichungstag der Anmeldung: **25.01.2017**
(21) Anmeldenummer: 16174844.7
(22) Anmeldetag: 16.06.2016
(51) Int. Cl.: B62M 3/00

(54) **KURBELTRIEB UND MIT MUSKELKRAFT UND/ODER MOTORKRAFT BETREIBBARES FAHRZEUG**

(30) Priorität: 23.07.2015 DE 102015213905
(71) Anmelder: ROBERT BOSCH GMBH, 70442 Stuttgart (DE)
(72) Erfinder: Braun, Sigmund, 72127 Kusterdingen (DE); Kaechele, Uwe, 72813 St. Johann-Wuertingen (DE); Binder, Julian, 76137 Karlsruhe (DE)

(57) **Zusammenfassung**

Die vorliegende Erfindung betrifft einen Kurbeltrieb für ein mit Muskelkraft und/oder Motorkraft betreibbares Fahrzeug (1), insbesondere für ein Elektrofahrrad (1), mit einer Kurbelwelle (15) mit einer Stirnseite (17-1), mindestens einer Kurbel (7, 8) mit einer Befestigungsöffnung (22) zur Montage der Kurbel (7, 8) an der Kurbelwelle (15) durch Umfassen der Kurbel (15) in einem Bereich (16) der Stirnseite (17-1) mit der Befestigungsöffnung (22), einer Positionsschraube (21) zur Befestigung der mindestens einen Kurbel (7, 8) im Bereich (16) der Stirnseite (17-1) der Kurbelwelle (15), welche (i) von der Stirnseite (17-1) der Kurbelwelle (15) in diese eingeschraubt ist, (ii) dabei die Befestigungsöffnung (22) der Kurbel (7, 8) durchdringt und (iii) sich mit einer der Stirnseite (17-1) der Kurbel (15) zugewandten Seite (34) Ihres Kopfes (32) bündig zumindest an einer Innenanschlagsfläche (26) in der Befestigungsöffnung (22) der Kurbel (7, 8) abstützt und einer Deckelschraube (23), welche in die Befestigungsöffnung (22) der Kurbel (7, 8) eingeschraubt ist und sich dabei mit einer der Stirnseite (17-1) der Kurbelwelle (15) zugewandten Seite (44) an der von der Stirnseite (17-1) der Kurbelwelle (15) abgewandten Seite (36) des Kopfes (32) der Positionsschraube (30) konternd abstützt, um dadurch die Kurbel (7, 8) axial auf der Kurbelwelle (15) zu fixieren.

## Beschreibung

### Stand der Technik

Die vorliegende Erfindung betrifft einen Kurbeltrieb für ein mit Muskelkraft und/oder Motorkraft betreibbares Fahrzeug, insbesondere für ein Elektrofahrrad, sowie ein mit Muskelkraft und/oder Motorkraft betreibbares Fahrzeug, insbesondere ein Elektrofahrrad, mit dem Kurbeltrieb.

Bei der Ausbildung von Kurbeltrieben für Fahrzeuge, insbesondere für mit Muskelkraft und/oder Motorkraft betreibbare Fahrzeuge, insbesondere für Elektrofahrräder oder dergleichen, ist es vorgesehen, zur Kraft- und Drehmomentübertragung von einer Kurbel auf eine Kurbelwelle die Kurbel im Bereich oder der Nähe der Stirnseite der Kurbelwelle zu befestigen. Dazu weist die Kurbel eine Befestigungsöffnung zur Montage der Kurbel an der Kurbelwelle auf. Im montierten Zustand umfasst dabei die Kurbel mit ihrer Befestigungsöffnung die Außenumfangsfläche der Kurbelwelle im Bereich oder der Nähe der Stirnseite. Zum Bespiel wird durch die Befestigungsöffnung der Kurbel hindurch eine Positionsschraube in die Stirnseite der Kurbelwelle eingeschraubt und dadurch die Kurbel durch die Befestigungsöffnung hindurch erfasst und im Bereich oder Nähe der Stirnseite der Kurbelwelle an die Kurbelwelle axial herangeführt und fixiert.

Bei diesem Vorgehen wird die Kurbelwelle zum Bespiel entweder mit einem Bund ausgebildet, also mit einem Bereich stärkeren Durchmessers. Alternativ kann eine Ringnut vorgesehen sein, in welche ein Ring als zusätzliches Element eingreift. Der Bund oder der Ring bilden einen axialen Anschlag, an welchem sich beim Anziehen der Positionsschraube die Kurbel mit einer der Kurbelwelle zugewandten Stirnseite abstützt.

Problematisch ist hierbei, dass der Kraftfluss von der Kurbel und der Positionsschraube in die Kurbelwelle über den Bund oder die Kombination aus Ringnut und Ring erfolgt, was zu einer Kerbwirkung und damit zu einer reduzierten Lebensdauer führen kann. Ferner sind beim Ausbilden des Bundes oder der Ringnut und des Rings ein zusätzlicher Herstellungs- und Materialaufwand sowie Platzbedarf - im Sinne einer gesteigerten Achslänge der Kurbelwelle - die Folge.

Bei einer herkömmlich an einer Kurbelwelle montierten Kurbel kann zum Schutz der montieren Positionsschraube und der entsprechenden Gewindekomponenten auf die freie Befestigungsöffnung nach Montage ein Schutzdeckel aufgesteckt oder aufgeschraubt werden, um das Eindringen von Schmutz oder Wasser in die Befestigungsöffnung zu reduzieren. Der dabei verwendete Schutz ist nach Art eines Deckels aus Kunststoff gefertigt und kann leicht montiert und auch wieder entfernt werden, wenn ein Zugriff auf die Befestigungsöffnung und die Positionsschraube nötig wird. Er trägt aber zur Befestigung der Kurbel an der Kurbelwelle nicht bei.

### Offenbarung der Erfindung

Der erfindungsgemäße Gegenstand mit den Merkmalen des unabhängigen Anspruchs 1 weist den Vorteil auf, dass bei verringertem Material- und Fertigungsaufwand und Platzbedarf bezogen auf die Kurbelwelle eine besonders verschleißfreie Befestigung einer Kurbel an einer Kurbelwelle möglich ist. Dies wird erfindungsgemäß mit den Merkmalen des unabhängigen Patentanspruchs 1 dadurch erreicht, dass ein Kurbeltrieb für ein mit Muskelkraft und/oder Motorkraft betreibbares Fahrzeug und insbesondere für ein Elektrofahrrad vorgeschlagen wird mit einer Kurbelwelle mit einer Stirnseite, mindestens einer Kurbel mit einer Befestigungsöffnung zur Montage der Kurbel an der Kurbelwelle durch Umfassen der Kurbel in einem Bereich der Stirnseite mit der Befestigungsöffnung, einer Positionsschraube zur Befestigung der mindestens einen Kurbel im Bereich der Stirnseite der Kurbelwelle, welche (i) von der Stirnseite der Kurbelwelle in diese eingeschraubt ist, (ii) dabei die Befestigungsöffnung der Kurbel durchdringt und (iii) sich mit einer der Stirnseite der Kurbel zugewandten Seite ihres Kopfes bündig zumindest an einer Innenanschlagsfläche in der Befestigungsöffnung der Kurbel abstützt und einer Deckelschraube, welche (iv) in die Befestigungsöffnung der Kurbel eingeschraubt ist und (v) sich dabei mit einer der Stirnseite der Kurbelwelle zugewandten Seite an der von der Stirnseite der Kurbelwelle abgewandten Seite des Kopfes der Positionsschraube konternd abstützt, um dadurch die Kurbel axial auf der Kurbelwelle zu fixieren.

Erfindungsgemäß wird somit ein Abstützen der montierten Kurbel mit ihrer der Kurbelwelle zugewandten Stirnseite im Bereich der Kurbelwelle, zum Beispiel an einem Bund oder an einer Kombination aus Ringnut und Ring, obsolet. Die Positionsschraube befestigt die Kurbel durch deren Befestigungsöffnung hindurch an der Kurbelwelle im Bereich oder in der Nähe zu deren Stirnseite. Dabei umfasst die Befestigungsöffnung die Außenumfangsfläche der Kurbelwelle im Bereich der Stirnseite und liegt in diesem Bereich an der Außenumfangsfläche an. Durch das Einschrauben der Deckelschraube in die Befestigungsöffnung der Kurbel und durch Abstützen der Deckelschraube an der der Deckelschraube zugewandten Seite des Kopfes der Positionsschraube durch Kontern wird die Kurbel axial auf der Kurbelwelle fixiert. Gerade der Vorgang des Konterns und des Abstützens der Deckelschraube am Kopf der Positionsschraube macht die Ausformung eines zusätzlichen axialen Anschlags in Form eines Bundes oder einer Kombination aus Ringnut und Ring im Bereich der Kurbelwelle überflüssig.

Die Unteransprüche zeigen bevorzugte Weiterbildungen der Erfindung.

Bei einer bevorzugten Ausführungsform des erfindungsgemäßen Kurbeltriebs stützt sich die Positionsschraube mit der der Stirnseite der Kurbelwelle zugewandten Seite Ihres Kopfes bündig an der Stirnseite der Kurbelwelle ab. Durch dieses zusätzliche Abstützen wird eine besonders stabile Positionierung und Fixierung der Kurbel an der Kurbelwelle erzielt. Denkbar sind jedoch auch Ausführungsformen, bei welchen sich die Positionsschraube ausschließlich an der Innenanschlagsfläche der Befestigungsöffnung der Kurbel abstützt, also zwischen der Positionsschraube und insbesondere deren Stirnseite und der Kurbelwelle ein endlicher Abstand verbleibt. Ein Abstützen an beiden Flächen erhöht jedoch die mechanische Stabilität des Befestigungsmechanismus.

Die Stabilität der Befestigung der Kurbel an der Kurbelwelle lässt sich weiter steigern, indem die Stirnseite der Kurbelwelle und/oder die Innenanschlagsfläche der Befestigungsöffnung der Kurbel, mithin also diejenigen Flächen, an welchen sich die Positionsschraube abstützen kann, aufeinander abgestimmt sind, um einen besonders innigen und stabilen Kontakt auszubilden. Dazu ist es vorgesehen, dass die der Stirnseite der Kurbelwelle zugewandte Seite der Deckelschraube und die von der Stirnseite der Kurbelwelle abgewandte Seite des Kopfes der Positionsschraube zusammenwirkende und insbesondere zueinander komplementäre Auflageflächen aufweisen.

Die Ausrichtung von Kurbel und Kurbelwelle und die Fokussierung der bei der Montage wirkenden Kräfte lassen sich weiter steigern, indem die zueinander komplementären Auflageflächen in Bezug auf eine gemeinsame Symmetrieachse von Positions- und Deckelschraube und/oder Drehachse der Welle einen konischen Verlauf aufweisen.

Eine besonders gut geschützte Anordnung für die Montage der Kurbel an der Kurbelwelle lässt sich erzielen, wenn (a) die Befestigungsöffnung der Kurbel einen ersten und einen zweiten Öffnungsabschnitt aufweist, welche mit unterschiedlichem Durchmesser d1, d2 und koaxial zueinander angeordnet sind, ineinander übergehen und dabei im Übergang die Innenanschlagsfläche bilden, (b) der erste Öffnungsabschnitt mit geringerem Durchmesser d1 eine Innenumfangsfläche aufweist, welche an einer Außenumfangsfläche des Bereiches der Kurbelwelle anliegt oder mit dieser eingreift, und (c) der zweite Öffnungsabschnitt mit größerem Durchmesser d2 eine Innenumfangsfläche mit Innengewinde aufweist, welches eingerichtet ist mit einem Außengewinde der Deckelschraube einzugreifen.

Zwar ist es möglich, die Flächen der Kurbelwelle und der Befestigungsöffnung der Kurbel ohne zusätzliche strukturelle Elemente auszugestalten, da das Verwenden von Positions- und Deckelschraube allein ein hohes Maß an Montagestabilität gewährleistet. Besonders vorteilhaft ist es jedoch, wenn der Eingriff der miteinander zur Anlage kommenden Flächen von Außenumfangsfläche der Kurbelwelle und Innenumfangsfläche Befestigungsöffnung der Kurbel strukturiert ausgebildet werden, zum Beispiel indem der erste Öffnungsabschnitt der Befestigungsöffnung der Kurbel an seiner Innenumfangsfläche eine Innenverzahnung aufweist, die Kurbelwelle an ihrer Außenumfangsfläche zumindest in einem Bereich eine Außenverzahnung aufweist und wobei die Innenverzahnung und die Außenverzahnung zum Eingriff miteinander eingreifen und insbesondere mit zueinander komplementärer Form ausgebildet sind.

Ein besonders hohes Maß an Kraft- und Drehmomentübertrag lässt sich erzielen, wenn der erste Öffnungsabschnitt der Befestigungsöffnung der Kurbel und der Bereich der Außenumfangsfläche der Kurbelwelle mit zueinander komplementärer Form ausgebildet sind, insbesondere kreiszylindrisch oder konisch.

Eine besonders zuverlässige und gleichwohl einfache Montage bei nicht gesteigertem Herstellungsaufwand ergibt sich, wenn die Kurbelwelle an ihrer Stirnseite eine Befestigungsöffnung mit einer Innenumfangsfläche mit Innengewinde und die Positionsschraube ein Außengewinde aufweist, welches mit dem Innengwinde der Befestigungsöffnung der Kurbelwelle eingreift.

Bekannt ist die Problematik beim Lösen einer bereits montierten Kurbel von einer Kurbelwelle. Die Kombination aus Positionsschraube und gegengekonterter Deckelschraube bietet die Möglichkeit, als so genannter Abzieher beim Lösen der Kurbel von der Kurbelwelle verwendet zu werden. Dazu weist in vorteilhafter Weise die Positionsschraube einen ersten Werkzeugansatz auf, welcher in der der Stirnseite der Welle abgewandten Seite des Kopfes der Positionsschraube eine Ausnehmung bildet. Die Deckelschraube weist einen zweiten Werkzeugansatz auf, welcher die Deckelschraube von der der Positionsschraube abgewandten Seite zu der der Positionsschraube zugewandten Seite als Öffnung vollständig durchdringt. Der zweite Werkzeugansatz besitzt einen Öffnungsquerschnitt oder Durchmesser, der größer ist als ein Öffnungsquerschnitt oder Durchmesser des ersten Werkzeugansatzes, so dass mit einem Werkzeug durch den zweiten Werkzeugansatz hindurch auf den ersten Werkzeugansatz und die Positionsschraube zugegriffen werden kann.

Besonders einfach gestaltet sich diese Ausführungsform, wenn der erste Werkzeugansatz und/oder der zweite Werkzeugansatz als Innensechskant oder als Torx ausgebildet sind. Dann können üblicherweise im Werkzeugsatz mitgeführte Inbusschlüssel oder dergleichen verwendet werden, um zum Beispiel auch unterwegs eine Reparatur durchführen zu können.

Alternativ dazu kann der erste Werkzeugansatz als Innensechskant und der zweite Werkzeugansatz als Innenvierkant oder als Innensechskant ausgebildet sein.

Eine besonders gleichmäßige Kraftverteilung zwischen Positionsschraube und Deckelschraube im gekonterten Zustand ergibt sich, wenn die Deckelschraube als Mutter mit Außengewinde auf ihrer Außenumfangsfläche ausgebildet ist und/oder der Kopf der Positionsschraube und die Deckelschraube-insbesondere in Richtung der gemeinsamen Symmetrieachse - die gleiche Dicke aufweisen.

Gemäß einem weiteren Aspekt der vorliegenden Erfindung wird ein mit Muskelkraft und/oder Motorkraft betreibbares Fahrzeug, insbesondere ein Elektrofahrrad geschaffen. Dieses weist einen Kurbeltrieb gemäß der vorliegenden Erfindung auf, einen elektrischen Antrieb, welcher insbesondere im Bereich des Kurbeltriebs angeordnet ist, sowie eine Steuereinheit, welche zur Steuerung des elektrischen Antriebs eingerichtet ist.

### Kurzbeschreibung der Figuren

Nachfolgend werden bevorzugte Ausführungsbeispiele der Erfindung unter Bezugnahme auf die begleitende Zeichnungen beschrieben.
- Figur 1: zeigt in schematischer Seitenansicht ein Beispiels eines erfindungsgemäßen Fahrzeugs nach Art eines Elektrofahrrads, bei welchem eine erste Ausführungsform der Erfindung realisiert ist.
- Figuren 2 - 8: zeigen in schematischer und teilweise geschnittener Draufsicht oder Seitenansicht eine Ausführungsform des erfindungsgemäßen Kurbeltriebs in verschiedenen Montagezuständen.
- Figuren 9 - 13: zeigen in schematischer und teilweise geschnittener Seitenansicht verschiedene Ausführungsformen des erfindungsgemäßen Kurbeltriebs im montierten Zustand.
- Figuren 14, 15: zeigen schematische und teilweise geschnittene Seitenansichten von Ausführungsformen bekannter Kurbeltriebe im montierten Zustand.

### Bevorzugte Ausführungsformen der Erfindung

Nachfolgend werden unter Bezugnahme auf die Figuren Ausführungsbeispiele der Erfindung im Detail beschrieben. Dabei werden gleiche oder gleichwirkende Komponenten mit denselben Bezugszeichen bezeichnet. Nicht in jedem Fall wird deren detaillierte Beschreibung wiederholt. Sämtliche Merkmale der dargestellten Ausführungsformen können in beliebiger Form miteinander kombiniert werden.

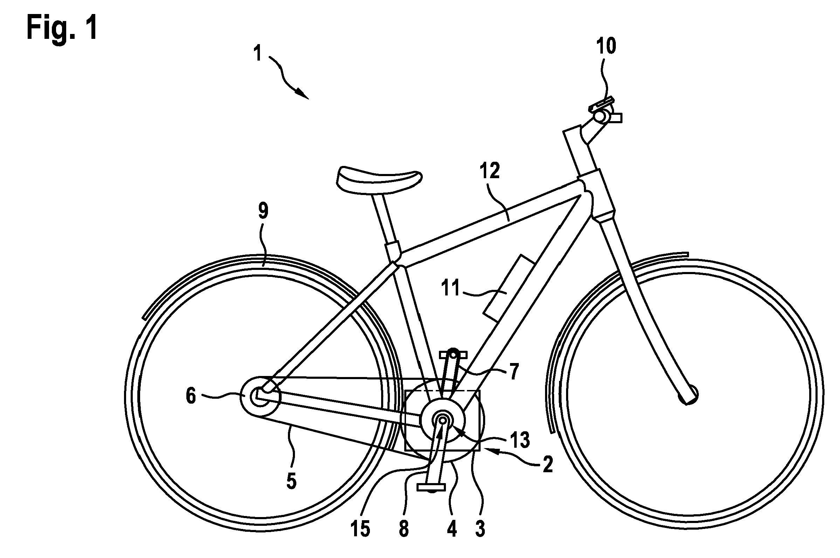

Das Elektrofahrrad 1 umfasst gemäß Figur 1 einen Kurbeltrieb 2 mit zwei Kurbeln 7, 8, an dem Pedale angeordnet sind. Ein elektrischer Antrieb 3 ist in den Kurbeltrieb 2 integriert. Am Hinterrad 9 ist eine Gangschaltung 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf ein Ritzel der Gangschaltung 6 übertragen.

Am Lenker des Fahrrads ist ferner eine Steuereinheit 10 angeordnet, welche mit dem elektrischen Antrieb 3 verbunden ist. Das Bezugszeichen 11 bezeichnet eine Batterie, welche zur Stromversorgung des elektrischen Antriebs 3 dient.

Im Rahmen 12 integriert ist im Kurbelgehäuse 13 eine Kurbelwelle 15 des Kurbeltriebs 2 ausgebildet, an welcher an deren Enden jeweils eine Kurbel 7, 8 erfindungsgemäß montiert ist.

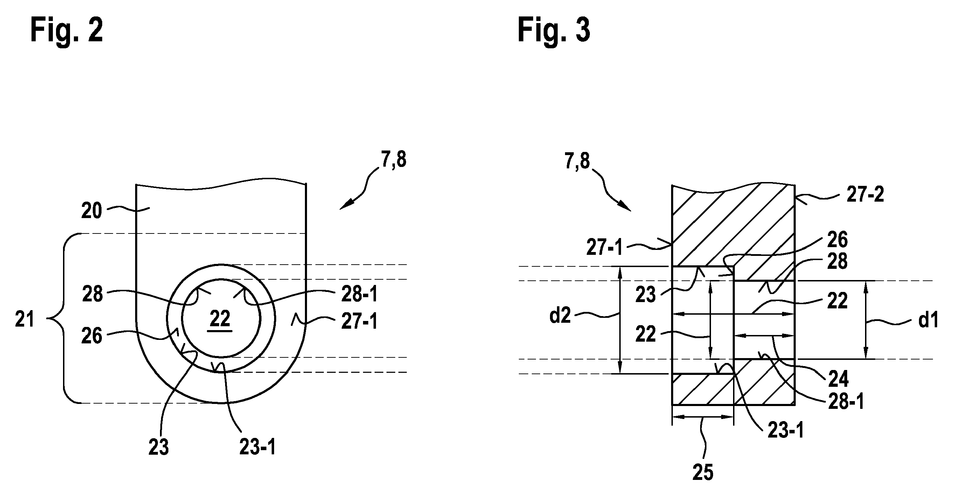

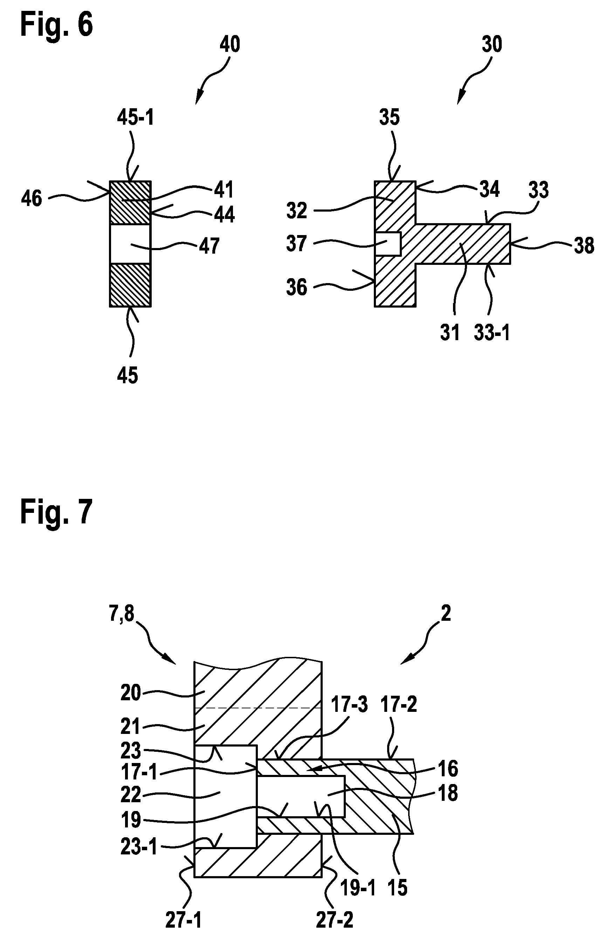

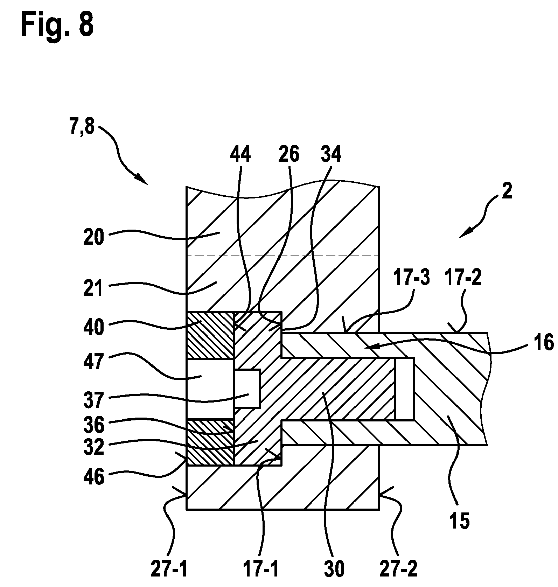

Die Figuren 2 bis 8 zeigen in schematischer und teilweise geschnittener Drauf-oder Seitenansicht eine Ausführungsform des erfindungsgemäßen Kurbeltriebs 2. Dabei sind in den Figuren 2 bis 6 die einzelnen Komponenten, nämlich die Kurbel 7, 8, die Kurbelwelle 15, die Positionsschraube 30 und die Deckelschraube 40 voneinander isoliert dargestellt. In der Figur 7 ist die Kurbel 7, 8 bereits im Bereich 16 der Stirnseite 17-1 der Kurbelwelle 15 montiert, wobei jedoch noch keine Fixierung durch die Positionsschraube 30 und die Deckelschraube 40 vorliegt. In der Figur 8 sind zusätzlich die Positionsschraube 30 und die Deckelschraube 40 montiert und damit ist die Kurbel 7, 8 an der Kurbelwelle 15 fixiert.

Zunächst zeigten die Figuren 2 und 3 Details der Kurbel 7, 8 dieser Ausführungsform in Draufsicht beziehungsweise in geschnittener Seitenansicht.

Die Kurbel 7, 8 besteht aus einem Kurbelkörper 20, welcher an seinem einen Ende einen Kurbelkopf 21 mit einer Montageöffnung 22 aufweist. Die Montageöffnung 22 ist bei dieser Ausführungsform in zwei zylindrische Öffnungsabschnitte 24 und 25 unterteilt, die miteinander an der gemeinsamen Symmetrieachse X koaxial ausgerichtet und miteinander so verbunden sind, dass die Montageöffnung 22 insgesamt den Kurbelkopf 21 von einer ersten Stirnseite 27-1 zur zweiten Stirnseite 27-2 vollständig durchmisst.

Der erste Öffnungsabschnitt 24 weist einen ersten, geringeren Innenddurchmesser d1 auf und besitzt an seiner Innenumfangsfläche 28, welche im montierten Zustand mit der Außenumfangsfläche 17-2 der Kurbelwelle 15 im Bereich 16 zur Anlage kommt, eine Innenverzahnung 28-1. Dies ist jedoch nicht zwingend.

Der zweite Öffnungsabschnitt 25 der Befestigungsöffnung 22 besitzt einen größeren Innendurchmesser d2 und weist an seiner Innenumfangsfläche 23 ein Innengewinde 23-1 auf, welches zur Montage mit der Deckelschraube 40 und deren Außengewinde 45-1 an deren Außenumfangsfläche 45 dient.

Auf Grund der unterschiedlichen Innendurchmesser d1 und d2 der ersten und zweiten Öffnungsabschnitte 24 und 25 liegt an deren Übergang eine Stufe vor, durch welche eine Innenanschlagsfläche 26 definiert wird, an welcher sich im montierten Zustand eine zugewandte Seite oder Fläche 34 der Positionsschraube 30 abstützt.

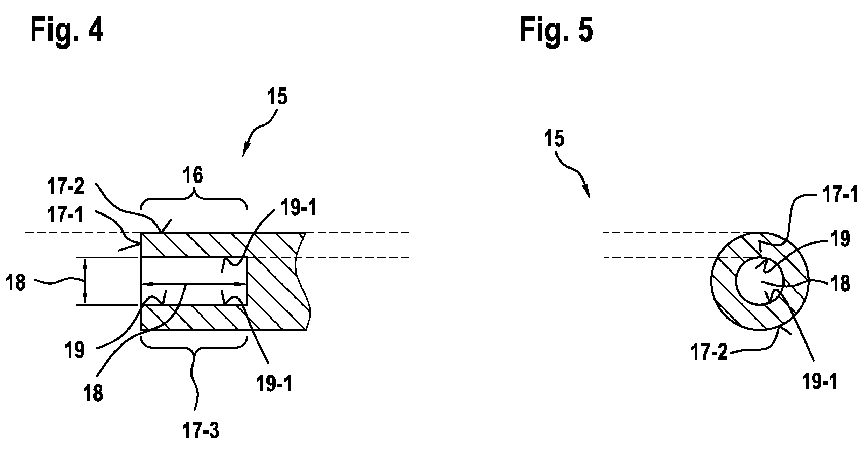

Nun zeigen die Figuren 4 und 5 Details der Kurbelwelle 15 dieser Ausführungsform in geschnittener Seitenansicht beziehungsweise in Draufsicht.

Die Kurbelwelle 15 ist im Wesentlichen von zylindrischer Gestalt mit einer Symmetrieachse X, welche der Rotationsachse der Kurbelwelle 15 entspricht. Die Kurbelwelle 15 besitzt zwei Enden, von denen in den Figuren4 und 5 nur eines dargestellt ist. Durch dieses Ende wird ein Bereich 16 definiert, an welchem die Befestigungsöffnung 22 der Kurbel 7, 8 die Außenumfangsfläche 17-2 der Kurbelwelle 15 umgreift. In diesem Bereich 16 weist die Außenumfangsfläche 17-2, die auch als Kurbelwellenmantel bezeichnet werden kann, gegebenenfalls eine Außenverzahnung 17-3 auf, um mit der Innenverzahnung 28-1 des ersten Öffnungsabschnitts 24 der Befestigungsöffnung 22 der Kurbel 7, 8 einzugreifen.

Der Bereich 16 der Kurbel 15 besitzt des Weiteren eine Stirnseite 17-1, in welcher zentral eine Montageöffnung 18 der Kurbelwelle 15 als in die Stirnfläche 17-1 oder-fläche eingreifende Ausnehmung ausgebildet ist. Die Montageöffnung 18 weist eine Innenumfangsfläche 19 auf. Bei dieser Ausführungsform ist die Innenumfangsfläche 19 mit der Montageöffnung 18 mit einem Innengewinde 19-1 ausgebildet, in welches im montierten Zustand das Außengewinde 33-1 der Positionsschraube 30 eingreift.

Während die Montageöffnung 18 der Kurbelwelle 15 in der Stirnseite 17-1 als Ausnehmung eine endliche Tiefe besitzt, ist die Befestigungsöffnung 22 im Kurbelkopf 21 der Kurbel 7, 8 als durchgehende Öffnung ausgebildet, wenn auch mit einem ersten und einem zweiten Öffnungsabschnitt 24, 25 mit unterschiedlichen Durchmessern d1 und d2.

Figur 6 zeigt in schematischer und geschnittener Seitenansicht auf der rechten Seite die Positionsschraube 30 und auf der linken Seite die Deckelschraube 40 dieser Ausführungsform des erfindungsgemäßen Kurbeltriebs 2.

Die Positionsschraube 30 weist einen Schraubenkörper 31 und einen Schraubenkopf 32 auf. Der Schraubenkörper 31 ist im Wesentlichen von kreiszylindrischer Gestalt mit einer Anschlagsfläche 38 und einer Außenumfangsfläche 33, an welcher ein Außengewinde 33-1 zum Eingreifen mit dem Innengewinde 19-1 an der Innenumfangsfläche 19 der Montageöffnung 18 der Kurbelwelle 15 ausgebildet ist.

Der Schraubenkopf 32 der Positionsschraube 30 besitzt einen größeren Durchmesser als der Schraubenkörper 31. Dem Schraubenkörper 31 zugewandt besitzt der Schraubenkopf 32 eine bei Montage der Kurbelwelle 15 zugeordnete und zugewandte Seite 34, die als Anschlagsfläche bei der Montage zur Anlage kommt mit der Innenanschlagsfläche 26 im Übergang zwischen dem ersten und zweiten Öffnungsabschnitt 24 und 25 der Befestigungsöffnung 22 der Kurbel 7, 8.

Dem Schraubenkörper 31 abgewandt besitzt der Schraubenkopf 32 eine bei Montage der Deckelschraube 40 zugeordnete und zugewandte und eine der Kurbelwelle 15 und deren Stirnseite 17-1 abgewandte Seite 36, welche im montierten Zustand mit einer dem Schraubenkopf 32 und der Kurbelwelle 15 und deren Stirnseite 17-1 zugeordneten und zugewandten Seite 40 der Deckelschraube 40 zur Anlage kommt. Zentral in dieser Seite 36 ist ein Werkzeugansatz 37 als Ausnehmung koaxial mit der Symmetrieachse X und Rotationsachse ausgebildet. Dieser Werkzeugansatz 37 kann zum Beispiel ein Innensechskant sein. Der Werkzeugansatz 37 dient dazu, mittels eines entsprechenden Werkzeugs die Positionsschraube 30 anzuziehen oder zu lösen.

Auf der linken Seite der Figur 6 ist eine Deckelschraube 40 dieser Ausführungsform des erfindungsgemäßen Kurbeltriebs 2 in schematischer und geschnittener Seitenansicht dargestellt.

Die Deckelschraube 40 besteht aus einem Schraubenkörper 21 nach Art einer Platte, zum Beispiel auch nach Art einer Mutter. Dem Kern nach besitzt die Deckelschraube 40 ebenfalls eine im Wesentlichen kreiszylindrische Gestalt, wobei die Außenumfangsfläche 45 als Mantel ein Außengewinde 45-1 trägt, welches im montierten Zustand mit dem Innengewinde 23-1 der Innenumfangsfläche 23 des zweiten Öffnungsabschnitts 25 der Befestigungsöffnung 22 der Kurbel 7, 8 eingreift.

Für die Montage ist eine Seite 46 der Deckelschraube 40 der Positionsschraube 30 und der Kurbelwelle 15 und deren Stirnseite 17-1 abgewandt, wogegen die andere Seite 44 als Stirnseite oder -fläche bei und zur Montage der Positionsschraube 30 und der entsprechenden Seite 36 des Kopfes 32 sowie der Kurbelwelle 15 und deren Stirnseite 17-1 zugeordnet und zugewandt ist.

Im montierten Zustand kommen durch konterndes Verschrauben der Positionsschraube 30 und der Deckelschraube 40 miteinander die Seite 44 der Deckelschraube 40 und die Seite 36 des Kopfes 32 der Positionsschraube 30 miteinander zur Anlage und stützen sich gegeneinander ab. Dadurch wird die im Innengewinde 19-1 der Innenumfangsfläche 19 der Montageöffnung 18 die Kurbelwelle 15 eingeschraubte Positionsschraube 30 gegen ein Lösen gesichert. Über das Verschrauben der Deckelschraube 40 mit ihrem Außengewinde 45-1 an der Außenumfangsfläche 45 im Innengewinde 23-1 an der Innenumfangsfläche 23 des zweiten Öffnungsabschnitts 25 der Befestigungsöffnung 22 der Kurbel 7, 8 wird die Kurbel 7, 8 gegen eine axiale Bewegung auf der Kurbelwelle 15 und deren Abschnitt 16 fixiert.

Figur 7 zeigt in schematischer und geschnittener Seitenansicht einen Zustand, bei welchem die Kurbel 7, 8 bereits an der Kurbelwelle 15 und deren Bereich 16 montiert ist, ohne jedoch durch das Verschrauben mittels der Positionsschraube 30 und der Deckelschraube 40 fixiert zu sein.

Die Befestigungsöffnung 22 am Kurbelkopf 21 der Kurbel 7, 8 umfasst den Bereich 16 der Kurbel 15 an dessen Außenumfangsfläche 17-2. Dabei kommen die Innenumfangsfläche 28 des ersten Öffnungsabschnittes 24 und die Außenumfangsfläche 17-2 des Bereichs 16 der Kurbelwelle 15 miteinander zur Anlage. Gegebenenfalls greifen die Innenverzahnung 28-1 des ersten Öffnungsabschnitts 24 und die Außenverzahnung 17-3 im Bereich 16 der Kurbelwelle 15 miteinander ein. Dadurch wird ein Verdrehen der Kurbel 7, 8 gegenüber der Kurbelwelle 15 reduziert oder verhindert. Somit wird ein besonders hohes Maß an Kraft- und Drehmomentübertragung ermöglicht.

Das Vorsehen und der Eingriff von Innenverzahnung 28-1 und Außenverzahnung 17-3 ist von großem Vorteil, weil sonst ein Spiel entstehen könnte, welches zu einem Verlust der Schraubenvorspannung und in Folge zum Lösen der Verbindung führen könnte.

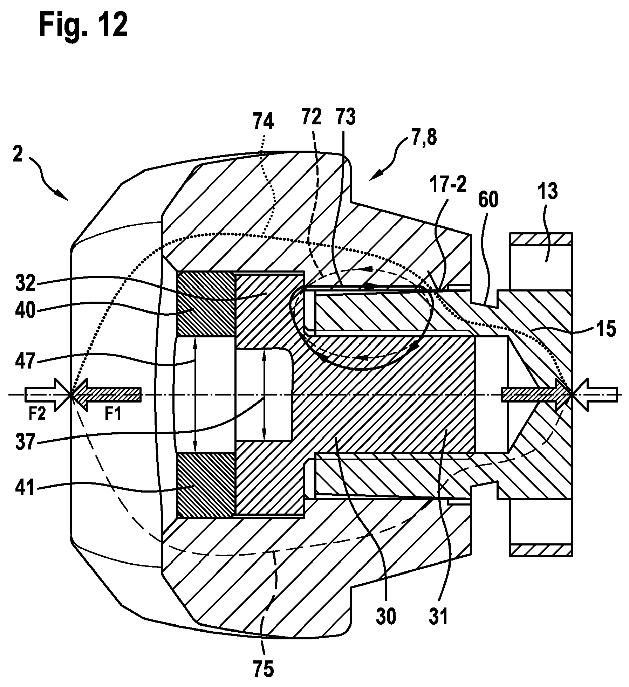

Bei dieser Ausführungsform der Figur 7 schließen die Stirnseite 17-1 der Kurbelwelle 15 und die Innenanschlagsfläche 26 der Befestigungsöffnung 22 der Kurbel 7, 8 miteinander bündig ab. Dies ist jedoch nicht zwingend erforderlich. Zum Beispiel können - wie später im Detail beschrieben werden wird - der Bereich 16 der Kurbelwelle 15 einerseits und die Innenumfangsfläche 28 des ersten Öffnungsabschnitts 24 der Befestigungsöffnung der Kurbel 7, 8 andererseits komplementär und konisch zueinander ausgebildet sein, so dass beim Anziehen der Positionsschraube 30 über diese Konusanordnung eine Verpressung von Kurbel 7, 8 und Kurbelwelle 15 gegeneinander bewirkt wird. In einem derartigen Zustand wäre es denkbar, dass die Innenumfangsfläche 28 des ersten Öffnungsabschnitts 24 nicht bis zur Bündigkeit der Innenanschlagsfläche 26 der Befestigungsöffnung 22 mit der Stirnseite 17-1 der Kurbelwelle 15 auf diese aufrückt. Dies ist im Detail im Zusammenhang mit Figur 12 dargestellt.

Figur 8 zeigt nun diese Ausführungsform mit zylindrischer Anordnung des erfindungsgemäßen Kurbeltriebs 2 im vollständig montierten Zustand in schematischer und geschnittener Seitenansicht.

Hier ist die Positionsschraube 30 in die Montageöffnung 18 der Kurbelwelle 15 mit dem Innengewinde 19-1 an deren Innenumfangsfläche 19 eingeschraubt. Auf Grund der zylindrischen Ausgestaltung des Bereichs 16 der Kurbelwelle 15 einerseits und des ersten Öffnungsabschnitts 24 der Befestigungsöffnung 22 der Kurbel 7, 8 andererseits wird bei Montage der Positionsschraube 30 die Befestigungsöffnung 22 mit ihrem ersten Öffnungsabschnitt 24 vollständig auf den Bereich 16 der Kurbelwelle 15 aufgeschoben. Dies geschieht, indem sich die Seite 34 des Schraubenkopfes 32 der Positionsschraube 30, welche der Stirnseite 17-1 der Kurbelwelle 15 zugewandt und zugeordnet ist, zunächst an der Innenanschlagsfläche 26 im Übergang zwischen erstem und zweitem Öffnungsabschnitt 24 und 25 abstützt, bis die Seite 34 durch Einschrauben mit ihrem Außengewinde 33-1 in das Innengewinde 19-1 der Montageöffnung 18 der Kurbelwelle 15 mit der Stirnseite 17-1 der Kurbelwelle 15 zur Anlage kommt.

Bei bekannten Kurbeltrieben würde sich auf der Außenumfangsfläche 17-2 der Kurbelwelle 15 nun ein Anschlag befinden, an welchen sich die der Kurbelwelle 15 zugewandte Stirnseite 27-1 des Kurbelkopfes 21 der Kurbel 7, 8 abstützt, damit die Kurbel 7, 8 axial fixiert ist und nicht weiter auf der Kurbelwelle 15 aufrutscht.

Derartige zusätzliche Mechanismen - die zum Beispiel gebildet werden können durch entsprechende Bünde oder durch Kombination aus Ringnut und Ring - können erfindungsgemäß entfallen, weil gemäß Figur 8 zusätzlich zur Positionsschraube 30 die Deckelschraube 40 mit Außengewinde 45-1 an der Außenumfangsfläche 45 in das Innengewinde 23-1 an der Innenumfangsfläche 23 des zweiten Öffnungsabschnitts 25 der Befestigungsöffnung 22 der Kurbel 7, 8 eingeschraubt wird. Dabei stützt sich im eingeschraubten Zustand der Deckelschraube 40 mit deren Seite 44 als Stirnseite oder -fläche, welche dem Schraubenkopf 32 und der Stirnseite 17-1 der Kurbelwelle 15 zugeordnet und zugewandt ist, an der Seite 36 des Schraubenkopfes 32 der Positionsschraube 30 ab, so dass ein Kontern mit Presssitz erfolgt und folglich der Kurbelkopf 21 der Kurbel 7, 8 im Bereich 16 der Kurbelwelle 15 in beiden Richtungen der Rotations- und Symmetrieachse X fixiert ist.

Aus der Figur 8 geht noch hervor, dass die Werkzeugansätze 37 und 47 der Positionsschraube 30 einerseits und der Deckelschraube 40 andererseits ebenfalls koaxial ausgerichtet sind zur gemeinsamen Symmetrie- und Rotationsachse X.

Der Werkzeugansatz 37 der Positionsschraube 30 besitzt einen ersten Durchmesser oder Öffnungsquerschnitt, welcher geringer ist als ein zweiter Öffnungsquerschnitt oder Durchmesser des Werkzeugansatzes 47 der Deckelschraube 40. Dadurch ist es möglich, dass man mit einem für den Werkzeugansatz 37 der Positionsschraube 30 geeigneten Werkzeug durch den Werkzeugansatz 47 der Deckelschraube 40 hindurch auf die Positionsschraube 30 zugreift, um diese zum Beispiel in einem Zustand zu lösen, bei welchem die Deckelschraube 40 noch als Widerlager dienend vorhanden ist, so dass beim Lösen der Positionsschraube 30 die Kurbel 7, 8 von der Kurbelwelle 15 gelöst wird und abgezogen werden kann.

Ein Widerlager kann alterbativ oder zusätzlich auch realisiert werden durch eine höhere Steigung der eingreifenden Gewinde 33-1, 19-1 im Vergleich zur Steigung der eingreifenden Gewinde 45-1, 23-1. Weiter ist dazu alternativ oder zusätzlich die Verwendung eines höheren Reibwerts bei den eingreifenden Gewinde 45-1, 23-1 im Vergleich zum Reibwert der eingreifenden Gewinde 33-1, 19-1 denkbar.

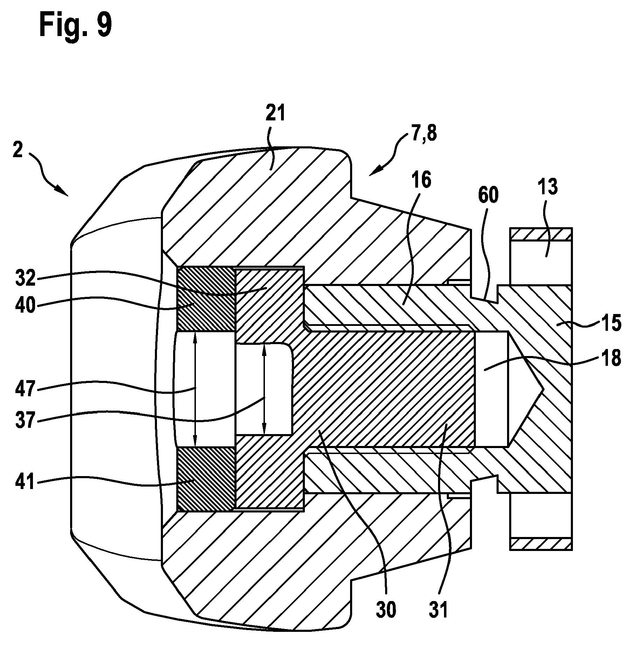

Im Folgenden werden andere Ausführungsformen des erfindungsgemäßen Kurbeltriebs 2 unter Bezugnahme auf die Figuren 9 bis 13 anhand schematischer und teilweise geschnittener Seitenansichten dargestellt.

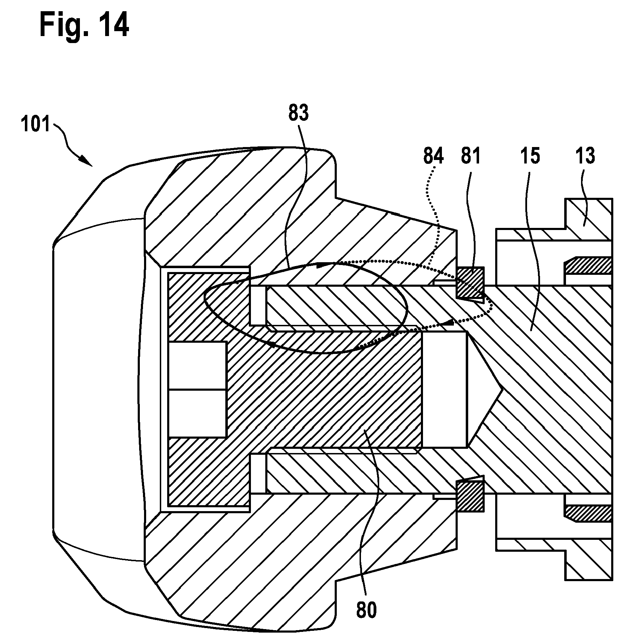

Bei der Ausführungsform des erfindungsgemäßen Kurbeltriebs 2 gemäß Figur 9 ist eine Anordnung gezeigt, die der Anordnung der Figuren 2 bis 8 ähnlich ist. Hier ist jedoch die Kurbelwelle 15 im Kurbellager 13 von herkömmlicher Gestalt. Das heißt, dass an der Außenumfangsfläche 17-1 der Kurbelwelle 15 im Bereich 16 eine Ringnut 60 ausgebildet ist, die üblicherweise zur Aufnahme eines die Stirnseite 27-1 abstützenden Rings 81 dient, wie er zum Beispiel bei der herkömmlichen Ausführungsform der Figur 14 dargestellt ist. Dieser Ring 81 kann hier jedoch entfallen.

Die Darstellung der Figur 9 zeigt also, dass die erfindungsgemäße Anordnung für einen Kurbeltrieb 2 als Nachrüstsatz auch bei einer herkömmlichen Kurbelwelle 15 Anwendung finden kann.

Es ist wieder zu sehen, dass die Kurbel 7, 8 mit ihrer Befestigungsöffnung 22 und deren ersten Öffnungsabschnitt 24 im Bereich 16 der Außenumfangsfläche 17-1 der Kurbelwelle 15 angebracht ist, wobei die Innenumfangsfläche 28 des ersten Öffnungsabschnitts 24 mit der Außenumfangsfläche 17-1 im Bereich 16 der Kurbel 15 zur Anlage miteinander kommen. Die Positionsschraube 30 ist in die Montageöffnung 18 der Stirnseite 17-1 der Kurbelwelle 15 eingeschraubt, wobei sich die Seite 34 des Kopfes 32 sowohl an der Innenanschlagsfläche 26 als auch an der Stirnseite 17-1 der Kurbelwelle 15 abstützt. Ein weiteres Verschieben der Kurbel 7, 8 in axialer Richtung der Kurbelwelle 15 wird durch die eingeschraubte Deckelschraube 40 verhindert, welche in den zweiten Öffnungsabschnitt 25 und dort in das Innengewinde 23-1 mit ihrem Außengewinde 45-1 eingreift und sich mit ihrer Seite 44 dem Schraubenkopf 32 zugewandt an dessen Seite 36 abstützt, so dass durch Kontern der Kurbelkopf 21 der Kurbel 7, 8 im Bereich 16 der Kurbelwelle 15 fixiert ist.

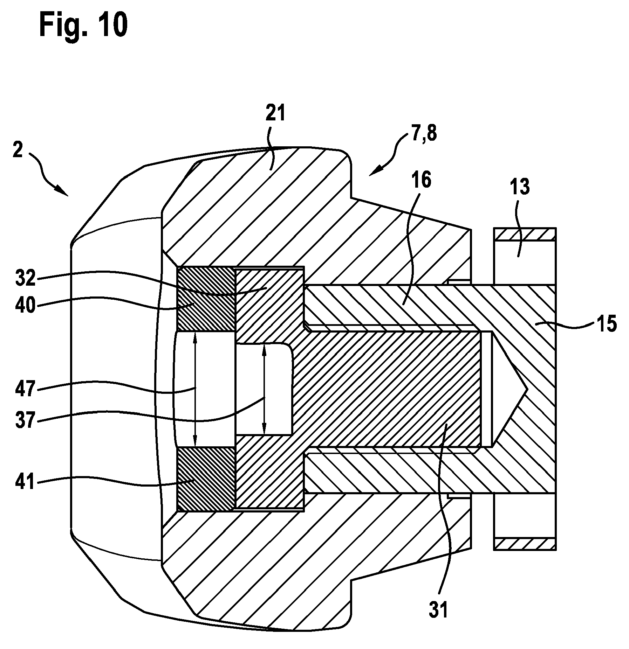

Bei der Ausführungsform der Figur 10 ist eine modifizierte Kurbelwelle 15 gezeigt. Im Gegensatz zur Ausführungsform der Figur 9 besitzt diese Kurbelwelle 15 keine Ringnut 60 und ist daher kürzer ausgestaltet, was deutlich wird durch den verringerten Abstand zwischen Stirnseite 27-1 des Kurbelkopfes 21 der Kurbel 7, 8 und dem Kurbelgehäuse 15. Ein derart verringerter Abstand senkt den Q-Faktor, nämlich den Abstand der beiden Kurbelaußenflächen zueinander und führt und zu einer Materialeinsparung. Dieser Abstand beeinflusst in der Verwendung auch den Abstand der Beine oder Füße beim Benutzer und verbessert somit die Ergonomie.

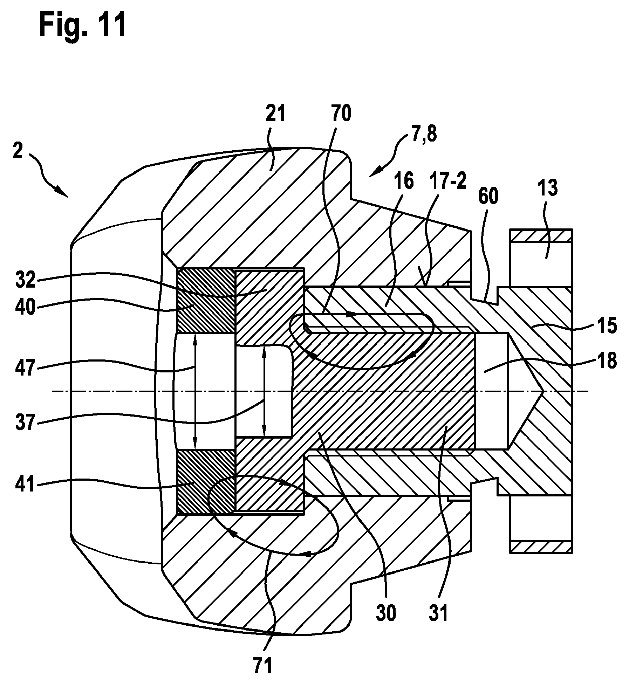

Die Darstellung der Figur 11 zeigt Kraftflüsse, die bei der Anordnung gemäß der Figur 9 wirksam werden. Die Positionsschraube 30 definiert die Position der Kurbel 7, 8, und bringt über den Schraubenkopf 32 eine Flügelkraft auf Kurbel 7, 8 und Kurbelwelle 15 auf. Dabei zeigt der Pfeilverlauf 70 die Vorspannkraft, die im Zusammenhang mit Schraubenkopf 30, auf Kurbelwelle 15 und Gewinde 19-1 und 33-1 in ihrem Verlauf wirksam wird.

Die Deckelschraube 40 fixiert und definiert die Kurbelposition hinsichtlich einer weiteren axialen Verschiebung in Richtung auf das Kurbelgehäuse 13 zu. Die Deckelschraube 40 verspannt die Positionsschraube 30 mit der Kurbel 7, 8. Die Vorspannkraft der Deckelschraube 40 ist in Figur 11 durch die Pfeilfolge 71 dargestellt. Die Kraftwirkung erfolgt, zum Beispiel auch bei Schlag auf die Kurbel, nach innen mit einem Verlauf über die Kurbel 7, 8, die Deckelschraube 40, den Kopf 32 der Positionsschraube 30 und die Kurbelwelle 15.

Durch das Zusammenwirken von Positionsschraube 30 und Deckelschraube 40 erfolgt eine eindeutig definierte Kurbelposition über die Kurbelwellenlänge.

Mit einem durchgehenden Werkzeugansatz 47 und geringerer Gewindesteigung für die Deckelschraube 40 ist im Vergleich zur Positionsschraube 30 die Funktion eines Kurbelabziehers realisierbar.

Bei der Anordnung der Figuren 9 und 11 kann es sich bei der Positionsschraube um eine M11x1-Schraube handeln, durch welche die Profilwellenverbindung mit möglicher Flankenzentrierung, hier in zylindrischer Form erreicht wird, wobei die Deckelschraube 40 der axialen Fixierung dient.

Eine ähnliche Anordnung zeiht Figur 12. Dort liegt jedoch im Unterschied zu den Darstellungen der Figuren 9 bis 11 die Positionsschraube 30 mit ihrem Kopf 32 und der Fläche 34 nur an der Innenanschlagsfläche 26 im Übergang zwischen erstem und zweiten Öffnungsabschnitt 24 und 25 an. Die Seite 34 des Kopfes 32 steht nicht mit der Stirnseite 17-1 der Kurbelwelle 15 in Kontakt. Der Grund für diesen Umstand liegt in der konischen Ausgestaltung der Innenumfangsfläche 28 des ersten Öffnungsabschnitts 24 der Befestigungsöffnung 22 der Kurbel 7, 8 einerseits und der entsprechend komplementär konischen Ausgestaltung der Außenumfangsfläche 17-2 der Kurbelwelle 15 im Bereich 16. Es erfolgt also hier eine Profilwellenverbindung mit Flanken- oder Innenringzentrierung bei konischem Verlauf der aneinander anliegenden Innen- und Außenumfangsflächen 17-2 und 28 von Kurbelkopf 21 und axialem Ende der Kurbelwelle 15 statt.

Die Pfeilabfolgen 72 bis 75 zeigen Kraftverläufe, wie sie bei einer derartige Anordnung auftreten. Die Pfeilabfolge 72 zeigt den Verlauf der Vorspannkraft der Positionsschraube 30 über Schraubenkopf 32, die Kurbel 7, 8, die Kurbelwelle 15 und deren konischen Bereich 16 und das Schraubengewinde 33-1 mit dem entsprechenden Innengewinde 19-1 der Befestigungsöffnung 18 der Kurbelwelle 15. Die Abfolgen 73 und 74 zeigen den Kraftverlauf in Bezug auf die Kurbel 7, 8, nämlich im Sinne einer Kraftwirkung nach außen nach Art eines Wiegetritts mit der Kraft F1. Dagegen zeigt der Verlauf 75 die Kraftwirkung nach innen im Sinne eines Schlags auf die Kurbel 7, 8 mit einer entsprechenden Kraft F2 entlang der Kurbel 7, 8 und der Kurbelwelle 15 mit dem konischen Bereich 16.

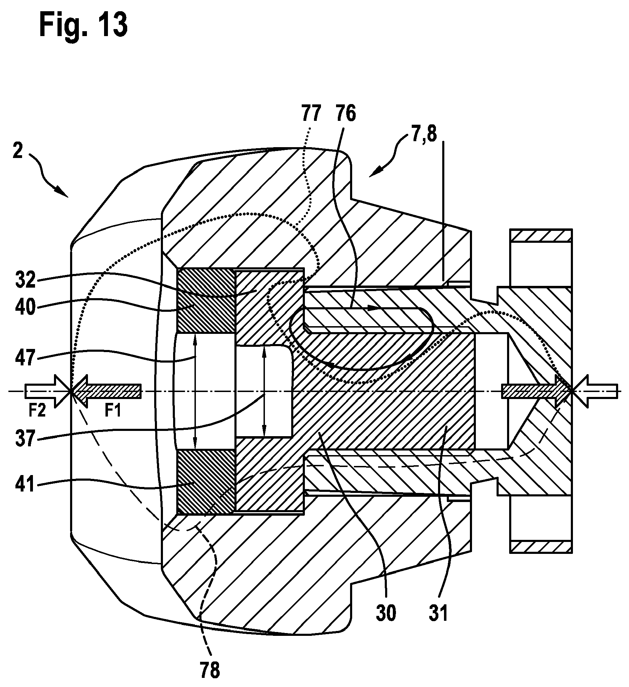

Figur 13 zeigt Kraftverläufe für eine ähnliche Anordnung wie der in Figur 12 dargestellten. Die Innenumfangsfläche 28-1 des ersten Öffnungsabschnitts 24 der Befestigungsöffnung 22 der Kurbel 7, 8 und die Außenumfangsfläche 17-2 der Kurbel 15 im Bereich 16 sind konisch ausgebildet. Im Gegensatz zu der in Figur 12 dargestellten Anordnung gibt es jedoch zwischen der Seite 34 des Schraubenkopfes 32, welche an der Innenanschlagsfläche 26 der Befestigungsöffnung 22 der Kurbel 7, 8 aufliegt, und der Stirnseite 17-1 der Kurbelwelle 15 keine Lücke. Vielmehr liegt die Seite 34 des Kopfes 32 der Positionsschraube 30 auch an der Stirnseite 17-1 der Kurbelwelle 15 an. Dieses Aufliegen der Positionsschraube 30 auf dem Kurbelwellenende und somit auf der Stirnseite 17-1 der Kurbelwelle 15 führt bei maximaler Fertigungstoleranz zu den mit den Pfeilabfolgen 76 bis 78 dargestellten Kraftverläufen.

Die Pfeilabfolge 76 zeigt den Verlauf der Vorspannkraft durch die Positionsschraube 30, nämlich über Schraubenkopf 32, Kurbelwelle 15 und Gewinde 19-1 und 33-1. Die Pfeilabfolge 77 demonstriert den Fluss der Kraftwirkung nach außen im Sinne eines Wiegetritts gemäß der Kraft F1, nämlich über die Kurbel 15, die Auflagefläche zwischen Positionsschraube 30 und Kurbel 7,8, also der Kontakt der Seiten 34 des Schraubenkopfes 32 und der Innenanschlagsfläche 26 des Kurbelkopfes 21, und der Kurbelwelle 15 und deren Gewinde 19-1 in der Befestigungsöffnung 18.

Die Pfeilabfolge 78 zeigt den Fluss bei Kraftwirkung nach innen, im Sinne eines Schlags auf die Kurbel mit der Kraft F2. Dieser Kraftverlauf erfolgt über die Kurbel 15, die Deckelschraube 40 mit deren Außengewinde 45-1 an der Außenumfangsfläche 45, dem Kopf 32 der Positionsschraube 30, und die Kurbelwelle 15 und deren Planfläche an der Stirnseite 17-1.

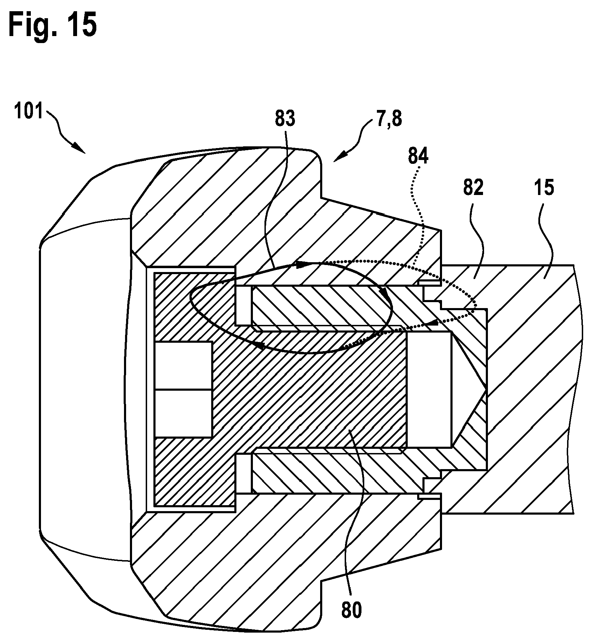

Die Figuren 14 und 15 zeigen herkömmliche Kurbeltriebe 101, bei welchen eine herkömmliche Positionsschraube 80 in die Stirnseite 17-1 einer Kurbelwelle 15 eingeschraubt ist, um dadurch den Kopf 21 der Kurbel 7, 8 mit der Stirnseite 27-1 entweder mit dem Anschlagsring 81 in der Ringnut 60 oder aber mit dem an der Außenumfangsfläche 17-2 der Kurbelwelle 15 angebrachten Bund 82 sich abzustützen. Diese bekannten Befestigungsmöglichkeiten bei herkömmlichen Kurbeltrieben 101 führen zu den oben bereits beschriebenen Nachteilen, nämlich der Notwendigkeit des Vorsehens einer Ringnut 60 und eines Anschlags- oder Sicherungsrings 80 mit entsprechender möglicher Kerbwirkung in der Achse und einer notwendigen zusätzlichen Achslänge, insbesondere gemäß der verwendeten Ringstärke. Dadurch werden Herstellung und Montage der Kurbelwelle 15 komplexer, auch dann, wenn man an Stelle eines Sicherungsrings 81 und der Nut 60 einen Bund 82 ausbildet.

## Patentansprüche

1. Kurbeltrieb für mit Muskelkraft und/oder Motorkraft betreibbares Fahrzeug (1), insbesondere für ein Elektrofahrrad (1),
mit:
- einer Kurbelwelle (15) mit einer Stirnseite (17-1),
- mindestens einer Kurbel (7, 8) mit einer Befestigungsöffnung (22) zur Montage der Kurbel (7, 8) an der Kurbelwelle (15) durch Umfassen der Kurbel (15) in einem Bereich (16) der Stirnseite (17-1) mit der Befestigungsöffnung (22),
- einer Positionsschraube (21) zur Befestigung der mindestens einen Kurbel (7, 8) im Bereich (16) der Stirnseite (17-1) der Kurbelwelle (15), welche
(i) von der Stirnseite (17-1) der Kurbelwelle (15) in diese eingeschraubt ist,
(ii) dabei die Befestigungsöffnung (22) der Kurbel (7, 8) durchdringt und
(iii) sich mit einer der Stirnseite (17-1) der Kurbel (15) zugewandten Seite (34) Ihres Kopfes (32) bündig zumindest an einer Innenanschlagsfläche (26) in der Befestigungsöffnung (22) der Kurbel (7, 8) abstützt und
- einer Deckelschraube (23), welche
(iv) in die Befestigungsöffnung (22) der Kurbel (7, 8) eingeschraubt ist und
(v) sich dabei mit einer der Stirnseite (17-1) der Kurbelwelle (15) zugewandten Seite (44) an der von der Stirnseite (17-1) der Kurbelwelle (15) abgewandten Seite (36) des Kopfes (32) der Positionsschraube (30) konternd abstützt, um dadurch die Kurbel (7, 8) axial auf der Kurbelwelle (15) zu fixieren.

2. Kurbeltrieb nach Anspruch 1, wobei sich die Positionsschraube (30) mit der der Stirnseite (17-1) der Kurbelwelle (15) zugewandten Seite (34) ihres Kopfes (32) bündig an der Stirnseite (17-1) der Kurbelwelle (15) abstützt.

3. Kurbeltrieb (2) nach einem der vorangehenden Ansprüche, wobei die der Stirnseite (17-1) der Kurbelwelle (15) zugewandte Seite (44) der Deckelschraube (40) und die von der Stirnseite (17-1) der Kurbelwelle (15) abgewandte Seite (36) des Kopfes (32) der Positionsschraube (30) zusammenwirkende und insbesondere zueinander komplementäre Auflageflächen aufweisen.

4. Kurbeltrieb nach Anspruch 3, bei welchem die zueinander komplementären Auflageflächen in Bezug auf eine gemeinsame Symmetrieachse (X) von Positions- und Deckelschraube (30, 40) und/oder Drehachse der Welle (15) einen konischen Verlauf aufweisen.

5. Kurbeltrieb nach einem der vorangehenden Ansprüche, wobei
- die Befestigungsöffnung (22) der Kurbel (7, 8) einen ersten und einen zweiten Öffnungsabschnitt (24, 25) aufweist, welche mit unterschiedlichem Durchmesser (d1, d2) und koaxial zueinander angeordnet sind, ineinander übergehen und dabei im Übergang die Innenanschlagsfläche (26) bilden,
- der erste Öffnungsabschnitt (24) mit geringerem Durchmesser (d1) eine Innenumfangsfläche (28) aufweist, welche an einer Außenumfangsfläche (17-2) des Bereiches (16) der Kurbelwelle (15) anliegt oder mit dieser eingreift, und
- der zweite Öffnungsabschnitt (25) mit größerem Durchmesser (d2) eine Innenumfangsfläche (23) mit Innengewinde (23-1) aufweist, welches eingerichtet ist mit einem Außengewinde (45-1) der Deckelschraube (40) einzugreifen.

6. Kurbeltrieb nach Anspruch 5, wobei
- der erste Öffnungsabschnitt (24) der Befestigungsöffnung (22) der Kurbel (7, 8) an seiner Innenumfangsfläche (28) eine Innenverzahnung (28-1) aufweist,
- die Kurbelwelle (15) an ihrer Außenumfangsfläche (17-2) zumindest in einem Bereich (16) eine Außenverzahnung (17-3) aufweist und
- die Innenverzahnung (28-1) und die Außenverzahnung (17-3) zum Eingriff miteinander eingreifen und insbesondere mit zueinander komplementärer Form ausgebildet sind.

7. Kurbeltrieb nach Anspruch 5 oder 6, wobei der erste Öffnungsabschnitt (24) der Befestigungsöffnung (22) der Kurbel (7, 8) und der Bereich (16) der Außenumfangsfläche (17-2) der Kurbelwelle (15) mit zueinander komplementärer Form ausgebildet sind, insbesondere kreiszylindrisch oder konisch.

8. Kurbeltrieb nach einem der vorangehenden Ansprüche, wobei
- die Kurbelwelle (15) an ihrer Stirnseite (17-1) eine Befestigungsöffnung (18) mit einer Innenumfangsfläche (19) mit Innengewinde (19-1) aufweist und
- die Positionsschraube (30) ein Außengewinde (33-1) aufweist, welches mit dem Innengwinde (19-1) der Befestigungsöffnung (18) der Kurbelwelle (15) eingreift.

9. Kurbeltrieb nach einem der vorangehenden Ansprüche, wobei
- die Positionsschraube (30) einen ersten Werkzeugansatz (37) aufweist, welcher in der der Stirnseite (17-1) der Welle (15) abgewandten Seite (36) des Kopfes (32) der Positionsschraube (30) eine Ausnehmung bildet,
- die Deckelschraube (40) einen zweiten Werkzeugansatz (47) aufweist, welcher die Deckelschraube (40) von der der Positionsschraube (30) abgewandten Seite (46) zu der der Positionsschraube (30) zugewandten Seite (44) als Öffnung vollständig durchdringt, und
- der zweite Werkzeugansatz (47) einen Öffnungsquerschnitt besitzt, der größer ist als ein Öffnungsquerschnitt des ersten Werkzeugansatzes (37), so dass mit einem Werkzeug durch den zweiten Werkzeugansatz (47) hindurch auf den ersten Werkzeugansatz (37) und die Positionsschraube (30) zugegriffen werden kann.

10. Kurbeltrieb nach Anspruch 9,
- wobei der erste Werkzeugansatz (37) und/oder der zweite Werkzeugansatz (47) als Innensechskant und/oder als Torx ausgebildet sind oder
- der erste Werkzeugansatz (37) als Innensechskant ausgebildet ist und der zweite Werkzeugansatz (47) Innenvierkant oder als Innensechskant ausgebildet ist.

11. Kurbeltrieb nach einem der vorangehenden Ansprüche, wobei
- die Deckelschraube (40) als Mutter mit Außengewinde (45-1) auf ihrer der Außenumfangsfläche (45) ausgebildet ist und/oder
- der Kopf (32) der Positionsschraube (30) und die Deckelschraube (40) - insbesondere in Richtung der gemeinsamen Symmetrieachse - die gleiche Dicke aufweisen.

12. Mit Muskelkraft und/oder Motorkraft betreibbares Fahrzeug (1), insbesondere Elektrofahrrad (1), umfassend:
- einen Kurbeltrieb (2) nach einem der Ansprüche 1 bis 11,
- einen elektrischen Antrieb (3), welcher insbesondere im Bereich des Kurbeltriebs (2) angeordnet ist, und
- eine Steuereinheit (10), welche zur Steuerung des elektrischen Antriebs (3) eingerichtet ist.
